# EUROPÄISCHE PATENTANMELDUNG

(11) **EP 0 590 625 A1**
(43) Veröffentlichungstag der Anmeldung: **06.04.1994**
(21) Anmeldenummer: 93115678.0
(22) Anmeldetag: 29.09.1993
(51) Int. Cl.: F24J 2/04, E04F 13/08

(54) **Fassadenelement**

(30) Priorität: 01.10.1992 CH 3077/92
(71) Anmelder: ISOROC AG FÜR DÄMMSYSTEME, CH-5200 Brugg (CH)
(72) Erfinder: Meier, Peter, CH-5200 Brugg (CH)
(74) Vertreter: Blum, Rudolf Emil Ernst

(57) **Zusammenfassung**

Das Fassadenelement dient zur Fassadenverkleidung eines Tragwerkes (8), z.B. eines Mauerwerkes (9). Die Fassadenverkleidung enthält einen Wärme-Kollektorrohrstrang (3) zum Nutzbarmachen der Umgebungswärme für ein Strömungsmedium z.B. für eine Wärmepumpenanlage. Die Aussenverputzschicht (2) ist verhältnismässig dünn, so dass die Umgebungswärme schnell, d.h. ohne grosse Trägheit auf den Wärme-Kollektorrohrstrang (3) wirkt. Der Vorteil liegt in der grossen Fläche der Fassadenverkleidung, so dass auch bei niedrigen Vorlauftemperaturen z.B. der Wärmepumpenanlage und geringen Temperaturdifferenzen zwischen Umgebungstemperatur und Strömungsmedium-Temperatur eine Nutzwärme vorhanden ist.

## Beschreibung

Die Erfindung betrifft ein Fassadenelement, umfassend eine Wärme-Isolierplatte, die dazu bestimmt ist einem Innenraum zugewandt zu liegen und einer daran anschliessenden Aussen-Verputzschicht. Ein solches Fassadenelement ist durch die CH-PS 654 869 bekannt.

Es wird bezweckt dieses Fassadenelement so weiter zu entwickeln, dass seine Verwendungsmöglichkeit erhöht wird, also es besser genutzt werden kann.

Die erfindungsgemässe Ausbildung des Fassadenelementes ist dadurch gekennzeichnet, dass zwischen der Wärme-Isolierplatte und der Aussen-Verputzschicht einzelne im Abstand voneinander liegende Rohrabschnitte eines Rohrstranges liegen, der dazu bestimmt ist als Wärme-Kollektorrohr für ein Strömungsmedium zu dienen, zum Leiten der Wärmeenergie von der Fassadenaussenseite zum Strömungsmedium.

Das erfindungsgemässe Fassadenelement und eine daraus gebildete Fassadenverkleidung eines Tragwerkes kann somit als Wärme-Kollektor dienen, wobei eine Wärmeübertragung von der Aussenatmosphäre zum Strömungsmedium im Wärme-Kollektorrohr erfolgt.

Bekannte Fassadenelemente mit eingebetteten Wärme-Kollektorrohren haben eine so grosse Masse (Stein, Beton), dass die Wärmeübertragung nur sehr träge stattfindet, da eine grosse Masse aufgeheizt werden muss. Es soll ein Fassadenelement geschaffen werden, bei dem dieser Nachteil vermieden werden kann.

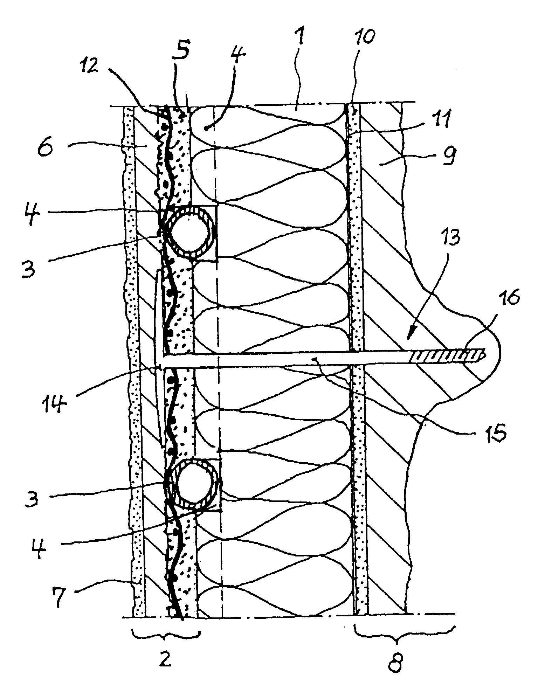

In der Zeichnung ist ein Ausführungsbeispiel des Erfindungsgegenstandes in einem Vertikal- oder Horizontalschnitt dargestellt.

Der gezeigte Ausschnitt des erfindungsgemässen Fassadenelementes zeigt eine Wärme-Isolierplatte 1, die dazu bestimmt ist einem Innenraum zugewandt zu liegen, der also in der Zeichnung rechts von der Wärme-Isolierplatte 1 liegt. Das Fassadenelement hat weiterhin eine an die Wärme-Isolierplatte 1 anschliessende Aussen-Verputzschicht 2. Zwischen der Wärme-Isolierplatte 1 und der Aussen-Verputzschicht liegen einzelne im Abstand voneinander liegende Rohrabschnitte 3 eines Rohrstranges, der dazu bestimmt ist, als Wärme-Kollektorrohr für ein Strömungsmedium zu dienen. Die Rohrabschnitte 3 und damit der erwähnte Rohrstrang dienen also zum Führen eines Strömungsmediums, insbesondere von Wasser. Die Rohrabschnitte 3 liegen in Rinnen 4 der Wärme-Isolierplatte 1 und sind somit in diese teilweise eingebettet.

Die Aussenverputzschicht 2 ist beim dargestellten Ausführungsbeispiel in eine Mörtelschicht 5, einen Grundputz 6 und einen Deckputz 7 unterteilt. Bei einem anderen nicht dargestellten Ausführungsbeispiel könnte die Aussenverputzschicht 2 auch nur in einen Grundputz 6 und einen Deckputz 7 unterteilt sein, wobei dann die in der Zeichnung gezeigte Mörtelschicht 5 vom Material des Grundputzes 6 ersetzt worden ist.

Die Wärme-Isolierplatte 1 wird an einem Träger 8 befestigt. Sowohl die Art des Trägers 8 als auch die Befestigung der Wärme-Isolierplatte 1 daran kann verschiedenartig sein. Beim gezeigten Beispiel weist der Träger ein Mauerwerk 9 auf, auf dem noch eine zweite Mörtelschicht 10 aufgebracht ist. Das Mauerwerk 9 kann z.B. aus Backstein, Beton, Gasbeton, Holz oder Metall sein. Auf diese zweite Mörtelschicht 10 ist die Wärme-Isolierplatte 1 mittels eines Klebers 11 angeklebt. Bei einem anderen nicht dargestellten Ausführungsbeispiel könnte der Träger 8 aber auch als Beplankung eines Metallgerüstes vorliegen.

Beim dargestellten Ausführungsbeispiel liegt in der Mörtelschicht 5 ein Gittergewebe 12. Dieses dient zur Armierung der Aussen-Verputzschicht 2 und zum Andrücken des Fassadenelementes an den Träger 9. Zur stabilen Befestigung des Fassadenelementes am Träger 8 dienen mehrere Befestigungsorgane 13, die im Abstand voneinander liegen, wobei in der Zeichnung nur eines dargestellt ist. Diese Befestigungsorgane 13 bestehen aus einem die Wärme schlecht leitendem Material, bevorzugterweise aus einem Kunststoff. Mit Hilfe dieser Befestigungsorgane 13 wird das Gittergewebe 12 je nach Aufbau der Aussen-Verputzschicht, entweder direkt an die Wärme-Isolierplatte 1 angedrückt oder in die Mörtelschicht 5 eingedrückt oder in den Grundputz 6 eingebettet. Jedes Befestigungsorgan 13 hat einen Kopf 14, einen Schaft 15 und ein Gewinde 16. Bei einem anderen Ausführungsbeispiel ist der Schaft 15 als Spreizdübel ausgebildet, in dessen zentrischem Hohlraum eine gesonderte Schraube einschraubbar ist, so dass dann also anstelle des dargestellten Gewindes 16 die Hinterschneidungen eines Spreizdübels vorhanden sind.

Der Rohrstrang und damit die dargestellten Rohrabschnitte 3 können aus einem die Wärme gut leitenden Material bestehen. Die Mörtelschicht 5 hat auch die Funktion als wasserabsweisende Schicht. Der Grundputz 6 dient als Ausgleichsschicht.

Mit den Fassadenelementen wird eine Fassadenverkleidung eines Tragwerkes, also eines Gebäudes erstellt. Durch diese Fassadenverkleidung steht somit eine grosse Kollektorfläche zur Wärmesammlung zur Verfügung. Die Wirkungsweise und Arbeitsweise kann man mit einer Fussbodenheizung im umgekehrten Sinn vergleichen, wobei bei der Fussbodenheizung über das Strömungsmedium Wärme über die daraufliegende Schicht und damit in den Innenraum abgegeben wird, wogegen im umgekehrten Sinn beim Erfindungsgegenstand die Wärme von der Atmosphäre durch Wärmeleitung und Wärmestrahlung auf die Aussen-Verputzschicht gebracht und von hier dem Strömungsmedium übergeben wird. Durch die Grosse Kollektorfläche kann mit geringen Vorlauftemperaturen beim Strömungsmedium gearbeitet werden. Das Strömungsmedium kann in bekannter und verschiedenartiger Weise weiterverwendet werden, so kann es z.B. zu einem Speicher führen oder einer Wärmepumpenanlage zugeführt werden. Das Strömungsmedium kann aber auch direkt zu Heizzwecken verwendet werden. Das Strömungsmedium kann weiterhin direkt zur Aufladung eines Erdspeichers bei einer Wärmepumpenanlage verwendet werden.

Da die Fassadenverkleidung mit dem erfindungsgemässen Fassadenelement eine vorerwähnte grosse Kollektorfläche bildet, kann ein solcher Kollektor auch bei nur geringem Temperaturgefälle zwischen Aussentemperatur und Temperatur des im Rohrstrang geführten Strömungsmediums wirtschaftlich arbeiten.

Selbstverständlich kann das Fassadenelement auch verwendet werden, um die Kälte der Umgebung dem Strömungsmedium zur Kühlung eines Innenraumes zu übermitteln.

## Patentansprüche

1. Fassadenelement, umfassend eine Wärme-Isolierplatte (1), die dazu bestimmt ist einem Innenraum zugewandt zu liegen und einer daran anschliessenden Aussen-Verputzschicht (2), dadurch gekennzeichnet, dass zwischen der Wärme-Isolierplatte (1) und der Aussen-Verputzschicht (2) einzelne im Abstand voneinander liegende Rohrabschnitte (3) eines Rohrstranges liegen, der dazu bestimmt ist als Wärme-Kollektorrohr für ein Strömungsmedium zu dienen, zum Leiten der Wärmeenergie von der Fassadenaussenseite zum Strömungsmedium, oder umgekehrt.

2. Fassadenelement nach Anspruch 1, dadurch gekennzeichnet, dass die Rohrabschnitte (3) in Rinnen (4) der Wärme-Isolierplatte (1) eingebettet liegen.

3. Fassadenelement nach Anspruch 1 oder 2, dadurch gekennzeichnet, dass die Aussenverputzschicht (2) in einen Grundputz und einen Deckputz unterteilt ist.

4. Fassadenelement nach Anspruch 1 oder 2, dadurch gekennzeichnet, dass die Aussenverputzschicht (2) in eine Mörtelschicht (5), Grundputz (6) und Deckputz (7) unterteilt ist.

5. Verwendung des Fassadenelementes nach einem der Ansprüche 1-4 zur Fassadenverkleidung eines Tragwerkes (8).
